# EUROPEAN PATENT SPECIFICATION

(11) **EP 3 936 417 B1**
(45) Date of publication and mention of the grant of the patent: **07.06.2023**
(21) Application number: 21179330.2
(22) Date of filing: 14.06.2021
(51) Int. Cl.: B62D 29/04, B62D 33/04

(54) **TIPPER FOR MOTOR VEHICLES, LORRIES, TRAILERS AND SEMI-TRAILERS COMPRISING A PLURALITY OF PANELS**
KIPPVORRICHTUNG FÜR KRAFTFAHRZEUGE, LASTKRAFTWAGEN, ANHÄNGER UND SATTELAUFLIEGER MIT MEHREREN PANEELEN
BASCULE POUR VÉHICULES À MOTEUR, CAMIONS, REMORQUES ET SEMI-REMORQUES COMPRENANT UNE PLURALITÉ DE PANNEAUX

(30) Priority: 10.07.2020 IT 202000016819
(43) Date of publication of application: 12.01.2022
(73) Proprietor: Unitrans S.r.l., 30030 Pianiga (VE) (IT)
(72) Inventor: MONSCHAUER, Karin, 6600 Muralto (CH); D'ALCONZO, Cosimo, 48121 Ravenna (IT)
(74) Representative: Bonini, Ercole

(56) References cited:
- CN-A- 109 397 841
- CN-U- 207 684 213
- US-A- 5 507 405
- US-A1- 2008 174 147
- US-A1- 2014 240 921

## Description

The present invention relates to a tipper for motor vehicles, lorries, trailers and semi-trailers, particularly but not exclusively suitable for isothermal vans and refrigerators.

It is known from US 2008/174147 A1 that tippers for motor vehicles, lorries, trailers and semi-trailers are generally made up of several "sandwich" panels which are then fixed together by gluing or by gluing and then by riveting.

In particular, each tipper is generally formed by the assembly of:
- a panel constituting the base of the tipper;
- two panels constituting the sidewalls of the tipper;
- a panel constituting the ceiling of the tipper;
- a panel constituting the head of the tipper;
- at least one wing, coupled to the sidewalls, or a shutter for access to the inside of the tipper itself.

Each panel is generally made inside a special mould by inserting special boundary surfaces into it.

Once said panel has been made, it is placed in a hot press to be then ready for use.

The "sandwich" panel will have a different shape depending on the number of boundary surfaces inserted into the mould.

Such a panel can also be made with the vacuum technique or by gluing.

It is also known that there are specific regulations for the width of tippers made with the aforesaid panels. These regulations differ from country to country.

In particular, the regulation of EU countries differs from that of non-European countries.

In some non-European countries, such as Australia, the maximum width of the tippers provided for by the relative transport regulations is smaller than that in EU countries.

Since the panels must have a certain minimum thickness in order to have an optimal level of thermal insulation, a smaller tipper width corresponds to a smaller volume of the internal containment compartment, which can therefore contain fewer products than to what is possible in the European Union. This entails a rise in costs for transport companies.

In this regard, Australian goods transport regulation prescribes a maximum external tipper width for trailers or semi-trailers of 2,500 mm, which is thus lower than the European regulation according to which the maximum width is 2,600 mm.

In order to solve this problem, it was decided to make the panels having a thickness lower than those of the known type. However, this implies a lower degree of thermal insulation in the internal compartment of the tipper. Furthermore, in countries with a hot climate such as Australia, keeping the cold inside the internal compartment of the tipper, using known type panels having a reduced thickness, would be very difficult.

The present invention intends to eliminate the above-mentioned drawbacks.

In particular, it is an object of the present invention to make a panel for trailer and semi-trailer tippers having a thickness that is lower than that of the panels of the known type while maintaining the same degree of thermal insulation allowed by the panels of the known type.

A further object of the present invention is to make a panel for trailer and semi-trailer tippers whose manufacturing costs are low.

The aforesaid objects are achieved by a tipper for motor vehicles, lorries, trailers and semi-trailers the main characteristics of which are in accordance with claim 1.

Further detailed features of the invention are the subject of the dependent claims.

Advantageously, the tipper according to the invention allows for the cost-effective maintenance of the internal temperature of the tipper by using at least one aerogel layer, which significantly reduces thermal dispersion to the outside and at the same time maintains the same degree of thermal insulation as the panels currently on the market.

Still advantageously, the tipper according to the invention makes it possible to lower the manufacturing costs compared to the panels of known type by making it possible to achieve the same degree of thermal insulation as the panels of known type even with panels having a reduced thickness.

Still advantageously, the tipper according to the invention allows saving the fuel needed to supply the motors of the cooling circuit of the tippers, in case frozen food is transported, but not only.

The aforementioned objects and the aforementioned advantages will be better highlighted during the description of a preferred embodiment of the invention which is given, by way of non-limiting example, with reference to the attached drawing tables in which:
- Fig. 1 represents a perspective view of a truck provided with semi-trailer comprising a tipper according to the invention;
- Fig. 2 represents an exploded view of the tipper of Fig. 1;
- Fig. 3 represents a side view of the truck tipper shown in Fig. 1;
- Fig. 4 represents an enlarged cross-sectional view along section line IV-IV of the tipper of Fig. 3;
- Fig. 5 represents a sectioned plan view of a detail of a portion of panel making up the panel of one of the sidewalls of the tipper of Fig. 1.

In the following description, reference will be made, purely by way of example, to the tipper of a semi-trailer.

However, it cannot be ruled out that the characteristics of the tipper described below can also be applied to tippers for motor vehicles, lorries and trailers. With reference to Fig.s 1 and 2, they show a tipper, indicated as a whole with **1,** for a truck **C** with semi-trailer.

The tipper **1** comprises:
- a first panel **2** constituting the base of the tipper **1;**
- a second and a third panel, respectively **3** and **4,** constituting the sidewalls of the tipper **1;**
- a fourth panel **5** constituting the ceiling of the tipper **1;**
- a fifth panel **6** constituting the head of the tipper **1**;
- an openable panel or shutter **7,** opposite to the fifth panel **6,** for closing the tipper **1.**

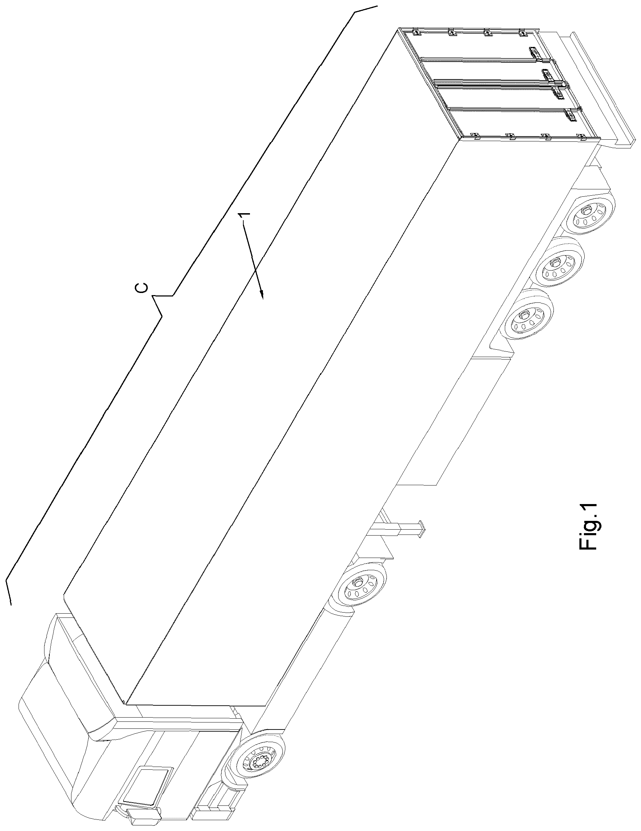

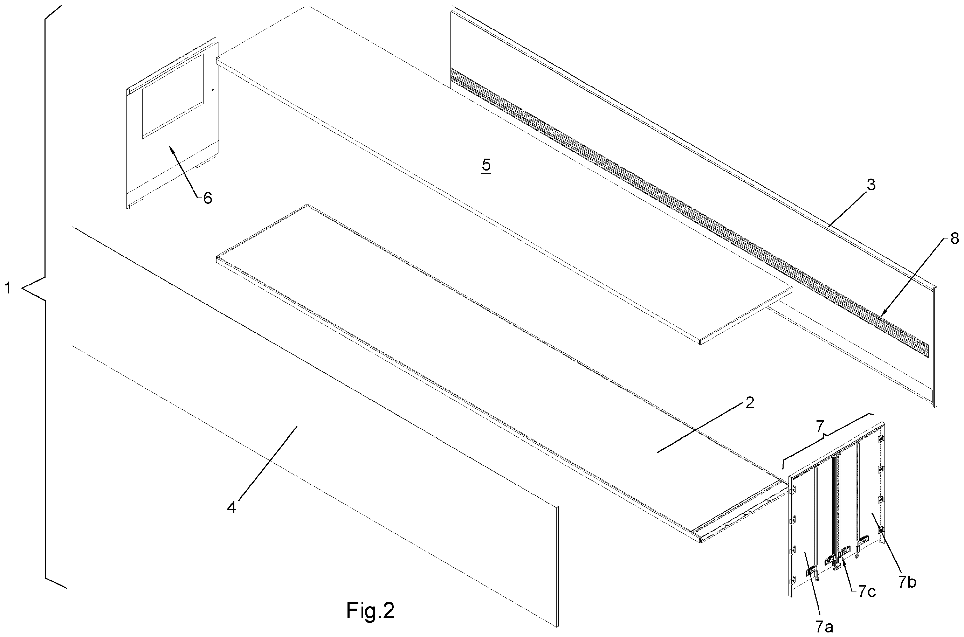

In the embodiment shown in Figs. 1 and 2, the openable panel or shutter **7** comprises two wings, **7a** and **7b** respectively, which close the tipper **1** at the front.

The hermetic closure of the aforesaid panel or shutter will then be ensured by means of closing means **7c.**

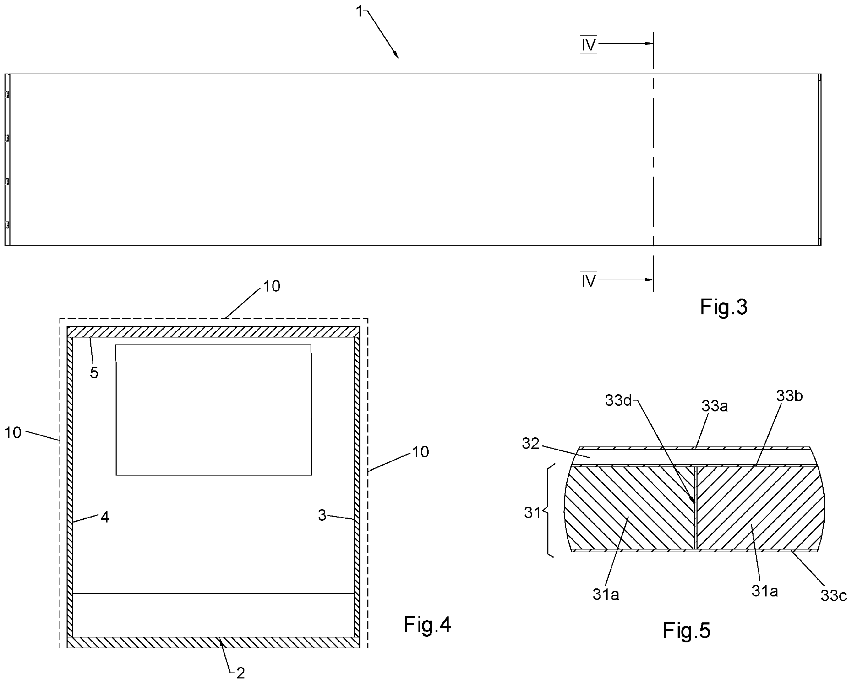

In accordance with the present invention and with reference to Figs. 2 and 5, the second, third and fourth panel, **3, 4** and **5** respectively, each comprise a first polyurethane layer **31** and a second aerogel layer **32,** as will be described in greater detail below.

Fig. 2 also shows that the second and third panel **3, 4** of the tipper **1** are each provided with a pallet strip **8.** In this case, the pallet strip **8** is only shown in the second panel **3** for ease of representation.

Advantageously, the pallet strip **8** serves as a shelter against possible impacts suffered by the pallets or, in general, by other loaded objects that may be inserted inside the tipper **1** during transport.

As can be observed in Fig. 4, the aerogel layer **32** is positioned externally on the second and third panel, **3, 4** respectively, and on that of the fourth panel **5** of the tipper **1.** This aerogel layer is represented schematically in Fig. 4 by the dotted lines **₁0.**

Although the aerogel layer **32** is preferably applied on the second, third and fourth panel **3, 4** and **5** (i.e. on the sidewalls and the ceiling), however it is not excluded, in an embodiment variant not shown herein, that the aerogel layer **32** can also be distributed on the first panel **2** or on the fifth panel **6** of the tipper **1.**

Furthermore, preferably, the aerogel layer **32** is applied externally to the polyurethane layer **31,** but it is not excluded that, in an embodiment variant not illustrated herein, it may be applied internally.

With reference to Fig. 5, therein it is shown a portion of panel in section, which comprises a first polyurethane layer **31** and a second aerogel layer **32,** such layers **31** and **32** being parallel to each other.

In particular, it can be observed that the fibreglass layers **33a, 33b** enclose the aerogel layer **32,** while the fibreglass layers **33b** and **33c** enclose the polyurethane layer **31.**

Basically, the fibreglass layers **33a, 33b, 33c** are covering fibreglass layers, as they cover the polyurethane layer **31** and/or the aerogel layer **32.**

Referring to Fig. 5, in addition to the three fibreglass layers **33a, 33b, 33c,** which are parallel and spaced apart from each other, there is also a fourth fibreglass layer **33d,** which crosses the polyurethane layer **31.**

In the present embodiment and as can be seen in Fig. 5, the fourth fibreglass layer **33d** is defined in a central position in each of the panel portions making up one of the panels **3, 4, 5.**

However, it is not excluded that, in different embodiments not illustrated herein, the fourth fibreglass layer is not defined in a central position in the relative portion of panel.

Advantageously, the aforesaid fibreglass layers **33a, 33b, 33c, 33d** are structural layers that constitute the framework of each of the panels **3, 4** and **5** and therefore give them greater strength and durability over time.

Again with reference to Fig. 5, it can be observed that the fourth fibreglass layer **33d** is distributed along a reinforcing transverse wall crossing the polyurethane layer **31.**

In the present embodiment, the reinforcing transverse wall coincides with the fourth fibreglass layer **33d.**

However, it is not excluded that, according to an embodiment variant not shown herein, the aforesaid reinforcing transverse wall **33d** may also develop in a direction not perpendicular to the polyurethane layer **31,** but simply incidental thereto.

In a further embodiment variant not shown herein, it is also possible that the reinforcing sidewalls may be more than one in number.

Advantageously, the aforesaid reinforcing sidewall **33d** further strengthens the panels **3, 4, 5** from a mechanical point of view and therefore contributes to increasing their durability over time.

Preferably, but not necessarily, the ranges of the layers that are particularly preferred in the construction of the panel portions to be assembled in the tippers travelling in hot countries such as Australia are as follows:
- aerogel layer: 3-10 mm;
- polyurethane layer: 30-60 mm;
- fibreglass layers: 1-3 mm (size of each individual layer).

It cannot be excluded that, in an embodiment variant not shown herein, the aerogel and polyurethane layers may be multiple.

Each of the second, third and fourth panels **3, 4, 5** of the tipper **1** comprises a plurality of single polyurethane plates **31a,** which are then assembled together to make the entire panel.

Once the various polyurethane plates **31a** have been assembled together, they will form the entire polyurethane layer **31** of each of the panels **3, 4, 5.** Then, the aerogel layer **32** is applied on the outside of the polyurethane layer **31** of each of the panels **3, 4, 5.**

Subsequently, once all the panels **2, 3, 4, 5, 6** of the tipper **1** have been assembled, they are coupled together by interlock.

Advantageously, the panels **2, 3, 4, 5, 6** are easily interlocked together because they have a U-shaped projecting profile at the ends (not visible in the figures) adapted to fit into special recesses with profiles that can be conjugated thereto (not visible in the figures).

This type of interlock has already been previously protected under utility model no. 283332 in the name of Ms Karin Monschauer.

In the above description, the panels comprising an aerogel layer are only the panels **3, 4** of the sidewalls and the panel of the ceiling **5** of the tipper **1** of the truck **C.**

However, it cannot be excluded that, in an embodiment variant not illustrated herein, an aerogel layer may also be present in the panels of the base and of the head, **2** and **6** respectively, of the tipper **1.**

The tipper according to the present invention therefore achieves the intended objects.

In fact, the object of making a tipper for trailers and semi-trailers composed of a plurality of panels with a thickness lower than that of the panels of the known type, while maintaining the same degree of thermal insulation as is allowed by the panels of the known type, has been achieved.

This object has been achieved by spreading one or more aerogel layers on the panels constituting the tipper, which aerogel significantly reduces heat dispersion and therefore maintains the internal temperature in the internal compartment of the tipper.

The object of making a tipper for trailers and semi-trailers composed of panels whose manufacturing costs are low has also been achieved, since the panel according to the invention has a lower thickness than the panels of known type and so material is saved without any increase in costs.

Modifications and/or variations may be made to the tipper according to the invention during the execution phase, which, although not described herein, should they fall within the scope of the following claims, are covered by the extend of protection.

## Claims

1. Tipper (1) for motor vehicles, lorries, trailers and semi-trailers comprising:
- a first panel (2) constituting the base of said tipper (1);
- a second panel (3) and a third panel (4) constituting the sidewalls of said tipper (1);
- a fourth panel (5) constituting the ceiling of said tipper (1);
- a fifth panel (6) constituting the head of said tipper (1);
- an openable panel or shutter (7), opposite to said fifth panel (6), for closing said tipper (1),
at least said second panel (3), said third panel (4) and said fourth panel (5) each comprising at least a first polyurethane layer (31) and at least a second aerogel layer (32),
**characterized in that,** between said at least one second aerogel layer (32) and said at least one first polyurethane layer (31), there is interposed at least one third fibreglass layer (33a, 33b, 33c), said at least one first polyurethane layer (31) and said at least one second aerogel layer (32) of said at least second, third and fourth panel (3, 4, 5) alternating with three respective fibreglass layers (33a, 33b, 33c) that are parallel to and spaced apart from each other.

2. Tipper (1) according to claim 1, **characterized in that** said at least one second aerogel layer (32) is external with respect to said at least one first polyurethane layer (31).

3. Tipper (1) according to claim 1 or 2, **characterized by** additionally comprising a fourth fibreglass layer (33d) developing transversally with respect to said three fibreglass layers (33a, 33b, 33c).

4. Tipper (1) according to any one of the preceding claims, **characterized in that** said at least a second, third and fourth panel (3, 4, 5) each have one or more reinforcing transverse walls.

5. Tipper (1) according to claim 4, **characterized in that** said one or more reinforcing transverse walls are defined between a central fibreglass layer (33d) and a covering fibreglass layer (33b, 33c), said one or more reinforcing transverse walls crossing said at least one polyurethane layer (31).

6. Tipper (1) according to claim 4 or 5, when depending on claim 3 **characterized in that** said one or more reinforcing transverse walls coincide with said fourth fibreglass layers (33d).

7. Tipper (1) according to any one of the preceding claims, **characterized in that** said at least a second, third and fourth panel (3, 4, 5) each have:
- at least one fibreglass layer (33a, 33b, 33c, 33d) having a thickness comprised between 1 and 3 mm;
- at least one polyurethane layer (31) having a thickness comprised between 30 and 60 mm;
- at least one aerogel layer (32) having a thickness comprised between 3 and 10 mm.

## Patentansprüche

1. Kippwagen (1) für Kraftfahrzeuge, Lastkraftwagen, Anhänger und Sattelauflieger, bestehend aus:
- einer ersten Tafel (2), die die Basis des Kippwagens (1) bildet;
- einer zweiten Tafel (3) und einer dritten Tafel (4), die die Seitenwände des Kippwagens (1) bilden;
- einer vierten Tafel (5), die die Decke des Kippwagens (1) bildet;
- einer fünften Tafel (6), die den Kopf des Kippwagens (1) bildet;
- einer der fünften Tafel (6) gegenüberliegenden, zu öffnenden Tafel oder Verschluss (7) zum Schließen des Kippwagens (1),
mindestens die zweite Tafel (3), die dritte Tafel (4) und die vierte Tafel (5) jeweils mindestens eine erste Polyurethanschicht (31) und mindestens eine zweite Aerogelschicht (32) aufweisen,
**dadurch gekennzeichnet, dass** zwischen der mindestens einen zweiten Aerogelschicht (32) und der mindestens einen ersten Polyurethanschicht (31) mindestens eine dritte Glasfaserschicht (33a, 33b, 33c) eingeschoben ist, wobei die mindestens eine erste Polyurethanschicht (31) und die mindestens eine zweite Aerogelschicht (32) der mindestens zweiten, dritten und vierten Tafel (3, 4, 5) sich mit drei jeweiligen Glasfaserschichten (33a, 33b, 33c) abwechseln, die parallel zueinander sind und voneinander beabstandet sind.

2. Kippwagen (1) nach Anspruch 1, **dadurch gekennzeichnet, dass** die mindestens eine zweite Aerogelschicht (32) in Bezug auf die mindestens eine erste Polyurethanschicht (31) außen liegt.

3. Kippwagen (1) nach Anspruch 1 oder 2, **dadurch gekennzeichnet, dass** er zusätzlich eine vierte Glasfaserschicht (33d) umfasst, die sich quer zu den drei Glasfaserschichten (33a, 33b, 33c) erstreckt.

4. Kippwagen (1) nach einem der vorhergehenden Ansprüche, **dadurch gekennzeichnet, dass** mindestens eine zweite, dritte und vierte Tafel (3, 4, 5) jeweils eine oder mehrere quer erstreckenden verstärkende Wände aufweisen.

5. Kippwagen (1) nach Anspruch 4, **dadurch gekennzeichnet, dass** die eine oder mehreren quer erstreckenden verstärkenden Wände zwischen einer zentralen Glasfaserschicht (33d) und einer abdeckenden Glasfaserschicht (33b, 33c) definiert sind, wobei die eine oder mehreren quer erstreckenden verstärkenden Wände die mindestens eine Polyurethanschicht (31) kreuzen.

6. Kippwagen (1) nach Anspruch 4 oder 5, wenn er von Anspruch 3 abhängt, **dadurch gekennzeichnet, dass** die eine oder mehreren quer erstreckenden verstärkenden Wände mit den vierten Glasfaserschichten (33d) zusammenfallen.

7. Kippwagen (1) nach einem der vorhergehenden Ansprüche, **dadurch gekennzeichnet, dass** die mindestens eine zweite, dritte und vierte Tafel (3, 4, 5) jeweils aufweisen:
- mindestens eine Glasfaserschicht (33a, 33b, 33c, 33d) mit einer Dicke zwischen 1 und 3 mm;
- mindestens eine Polyurethanschicht (31) mit einer Dicke zwischen 30 und 60 mm;
- mindestens eine Aerogelschicht (32) mit einer Dicke zwischen 3 und 10 mm.

## Revendications

1. Benne (1) pour véhicules à moteur, camions, remorques et semi-remorques comprenant:
- un premier panneau (2) constituant la base de ladite benne (1);
- un deuxième panneau (3) et un troisième panneau (4) constituant les parois latérales de ladite benne (1);
- un quatrième panneau (5) constituant le plafond de ladite benne (1);
- un cinquième panneau (6) constituant la tête de ladite benne (1);
- un panneau ou volet ouvrable (7), opposé audit cinquième panneau (6), pour fermer ladite benne (1),
au moins ledit deuxième panneau (3), ledit troisième panneau (4) et ledit quatrième panneau (5) comprenant chacun au moins une première couche de polyuréthane (31) et au moins une deuxième couche d'aérogel (32),
**caractérisée en ce que,** entre ladite au moins une deuxième couche d'aérogel (32) et ladite au moins une première couche de polyuréthane (31), est interposée au moins une troisième couche de fibre de verre (33a, 33b, 33c), ladite au moins une première couche de polyuréthane (31) et ladite au moins une deuxième couche d'aérogel (32) dudit au moins deuxième, troisième et quatrième panneau (3, 4, 5) alternant avec trois couches de fibre de verre respectives (33a, 33b, 33c) qui sont parallèles et espacées les unes des autres.

2. Benne (1) selon la revendication 1, **caractérisée en ce que** ladite au moins une deuxième couche d'aérogel (32) est externe par rapport à ladite au moins une première couche de polyuréthane (31).

3. Benne (1) selon la revendication 1 ou 2, **caractérisée en ce qu'**elle comprend en outre une quatrième couche de fibre de verre (33d) se développant transversalement par rapport auxdites trois couches de fibre de verre (33a, 33b, 33c).

4. Benne (1) selon l'une quelconque des revendications précédentes, **caractérisée en ce que** ledit au moins un deuxième, troisième et quatrième panneau (3, 4, 5) comportent chacun une ou plusieurs parois transversales de renforcement.

5. Benne (1) selon la revendication 4, **caractérisée en ce que** lesdites une ou plusieurs parois transversales de renforcement sont définies entre une couche centrale en fibre de verre (33d) et une couche de couverture en fibre de verre (33b, 33c), lesdites une ou plusieurs parois transversales de renforcement traversant ladite au moins une couche de polyuréthane (31).

6. Benne (1) selon la revendication 4 ou 5, lorsqu'elle dépend de la revendication 3, **caractérisée en ce que** lesdites une ou plusieurs parois transversales de renforcement coïncident avec lesdites quatrièmes couches de fibre de verre (33d).

7. Benne (1) selon l'une quelconque des revendications précédentes, **caractérisée en ce que** ledit au moins un deuxième, troisième et quatrième panneau (3, 4, 5) comportent chacun:
- au moins une couche de fibre de verre (33a, 33b, 33c, 33d) ayant une épaisseur comprise entre 1 et 3 mm;
- au moins une couche de polyuréthane (31) ayant une épaisseur comprise entre 30 et 60 mm;
- au moins une couche d'aérogel (32) ayant une épaisseur comprise entre 3 et 10 mm.
